# EUROPEAN PATENT SPECIFICATION

(11) **EP 4 216 505 B1**
(45) Date of publication and mention of the grant of the patent: **25.06.2025**
(21) Application number: 21879382.6
(22) Date of filing: 12.10.2021
(51) Int. Cl.: H04L 43/00, H04L 12/46, H04L 41/0213, H04L 41/0631, H04L 41/0677, H04L 41/0806, H04L 41/12, H04L 41/22, H04L 45/02, H04L 45/00, H04L 45/28, H04L 45/74

(54) **PATH DETERMINATION METHOD AND APPARATUS, AND COMPUTER STORAGE MEDIUM**
PFADBESTIMMUNGSVERFAHREN UND -VORRICHTUNG SOWIE COMPUTERSPEICHERMEDIUM
PROCÉDÉ ET APPAREIL DE DÉTERMINATION DE CHEMIN, ET SUPPORT DE STOCKAGE INFORMATIQUE

(30) Priority: 15.10.2020 CN 202011103339
(43) Date of publication of application: 26.07.2023
(73) Proprietor: Huawei Technologies Co., Ltd., Shenzhen, Guangdong 518129 (CN)
(72) Inventor: CAO, Yanping, Shenzhen, Guangdong 518129 (CN); YANG, Qiang, Shenzhen, Guangdong 518129 (CN); ZHANG, Zhenwei, Shenzhen, Guangdong 518129 (CN); WENG, Cairen, Shenzhen, Guangdong 518129 (CN)
(74) Representative: Pfenning, Meinig & Partner mbB
(86) International application number: PCT/CN2021/123326
(87) International publication number: WO 2022/078338

(56) References cited:
- CN-A- 105 871 612
- CN-A- 107 749 803
- CN-A- 109 347 798
- CN-A- 109 922 075
- CN-A- 110 008 288
- US-A1- 2013 329 599
- US-A1- 2014 016 467
- US-A1- 2019 334 778
- CERRATO IVANO ET AL: "Toward dynamic virtualized network services in telecom operator networks", COMPUTER NETWORKS, ELSEVIER, AMSTERDAM, NL, vol. 92, 9 October 2015 (2015-10-09), pages 380 - 395, XP029311570, ISSN: 1389-1286, DOI: 10.1016/J.COMNET.2015.09.028

## Description

### TECHNICAL FIELD

This application relates to the field of network technologies, and in particular, to a path determining method and apparatus, and a computer storage medium.

### BACKGROUND

In a current network, a service fault usually occurs because traffic is interrupted due to a network environment problem, an incorrect manual operation, or a device defect. Most of services (especially financial services, banking services, and the like) are quite sensitive to service faults. Therefore, after a service fault occurs, fault locating needs to be performed in time, and a corresponding isolation or recovery measure needs to be taken on a faulty device. Currently, fault locating is usually implemented based on a transmission path of a faulty service in a network.

In-situ flow information telemetry (in-situ flow information telemetry, iFIT) is a current common means for determining a transmission path of a service in a network. In an iFIT scheme, a packet header of a service packet is colored and then per-packet and per-hop detection is performed to restore a real transmission path of the service in the network.

However, the iFIT scheme can be used to determine the transmission path of the service in the network only when a real service packet is transmitted in the network. Therefore, an application limitation of determining a path by using the iFIT scheme is high.

US 2013/329599 describes a method of analyzing connectivity between a source and a destination that comprises: upon obtaining a partial topological network model comprising at least one cloud, generating the one or more paths between the source and the destination, specifying the cloud as a source point of the one or more paths if at least one source network address belongs to the cloud address space and specifying the cloud as a destination point of the one or more paths between the source and the destination if at least one destination network address belongs to the cloud address space.

US 2014/016467 describes a network element (NE) comprising a receiver configured to receive a path computation request, a path computation element (PCE) coupled to the receiver and configured to compute a group of network paths through a network of NEs operating in a network stratum in response to the path computation request, wherein each network path comprises one or more physical links, and compute at least one constraint for each physical link, and an abstraction module coupled to the PCE and configured to receive the computed network path set and constraints, compute one or more abstract links that describe the network path group, and compute a constraint for each abstract link based on the physical link constraints.

Ivano Cerrato et. al.: "Toward dynamic virtualized network services in telecom operator networks", Computer Networks vol. 92 pp. 380-395, 9 October 2015, proposes a description-based approach to delivering end-to-end generic services in presence of multiple concurring players, that allows the deployment of agile, implementation-independent and high-level network services over a distributed set of resources.

### SUMMARY

This application provides a path determining method and apparatus, and a computer storage medium, so as to resolve a problem that a current application limitation of determining a service path is high. The invention is defined by the independent claims. Further embodiments of the invention are defined by the dependent claims. Although the invention is only defined by the claims, the below embodiments, examples and aspects are present for aiding in understanding the background and advantages of the invention.

The beneficial effects brought by the technical solutions provided in this application include at least the following:

In this application, the knowledge graph of the network includes the knowledge graph triplets, and another network entity that has a relationship with one network entity can be found by using the network entity. Therefore, after obtaining the source network entity and the destination network entity on the knowledge graph, the analysis device can determine the transmission path from the source network entity to the destination network entity based on the relationship between the network entities. When the source network entity is a network entity corresponding to the source device, and the destination network entity is a network entity corresponding to the destination device, a transmission path from the source network entity to the destination network entity is the transmission path from the source device to the destination device. In this application, when the transmission path between the two devices is determined, there is no need to depend on a service packet transmission scenario, and therefore path determining flexibility is high. In addition, in this application, all transmission paths from the source network entity to the destination network entity can be found by searching the knowledge graph. This may be applied to more scenarios. Further, because the abnormal network entity is identified on the transmission path determined by the analysis device, the analysis device may further determine a network entity having a root cause fault on the transmission path based on a fault propagation rule, to determine the fault root cause of the abnormal service, and implement end-to-end fault root cause locating. In addition, after determining the transmission path on the knowledge graph of the target network based on the abnormal event generated in the target network, the analysis device can detect, in real time, a fault that is in the target network and that causes the abnormal event, and fault locating efficiency is high.

### BRIEF DESCRIPTION OF DRAWINGS

FIG. 1 is a schematic diagram of an application scenario related to a path determining method according to an embodiment of this application;
FIG. 2 is a schematic diagram of a structure of a communication network according to an embodiment of this application;
FIG. 3 is a schematic flowchart of a path determining method according to an embodiment of this application;
FIG. 4 is a schematic diagram of a structure of a knowledge graph according to an embodiment of this application;
FIG. 5 is a schematic diagram of a structure of another knowledge graph according to an embodiment of this application;
FIG. 6 is a schematic diagram of a structure of a path determining apparatus according to an embodiment of this application;
FIG. 7 is a schematic diagram of a structure of a first determining module according to an embodiment of this application;
FIG. 8 is a schematic diagram of a structure of another path determining apparatus according to an embodiment of this application;
FIG. 9 is a schematic diagram of a structure of still another path determining apparatus according to an embodiment of this application;
FIG. 10 is a schematic diagram of a structure of yet another path determining apparatus according to an embodiment of this application;
FIG. 11 is a schematic diagram of a structure of still yet another path determining apparatus according to an embodiment of this application; and
FIG. 12 is a block diagram of a path determining apparatus according to an embodiment of this application.

### DESCRIPTION OF EMBODIMENTS

To make the objectives, technical solutions, and advantages of this application clearer, the following further describes the implementations of this application in detail with reference to the accompanying drawings.

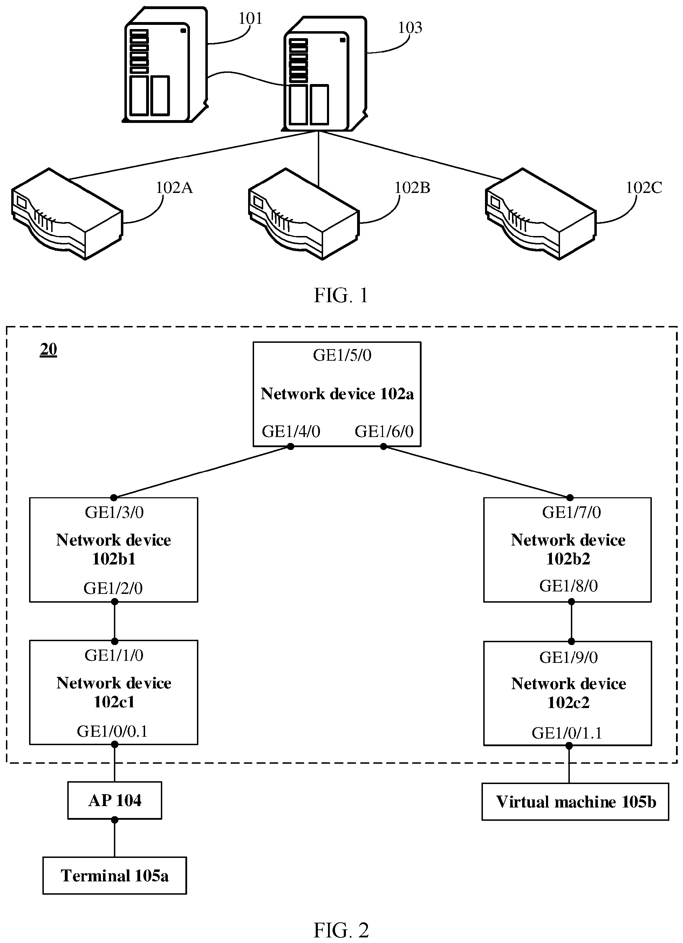

FIG. 1 is a schematic diagram of an application scenario related to a path determining method according to an embodiment of this application. As shown in FIG. 1, the application scenario includes an analysis device 101 and network devices 102A to 102C (collectively referred to as a network device 102) in a communication network. A quantity of network devices in FIG. 1 is merely used as an example for description, and is not intended to limit the communication network in embodiments of this application.

The analysis device 101 may be one server, a server cluster including several servers, or a cloud computing service center. The network device 102 may be a physical communication device such as a switch or a router, or may be a virtual communication device such as a virtual switch or a virtual router.

Optionally, still refer to FIG. 1. The application scenario further includes a control device 103. The control device 103 is configured to manage and control the network device 102 in the communication network. The control device 103 may be a network controller, a network management device, a gateway, or another device having a control capability. The control device 103 may be one or more devices. The analysis device 101 and the control device 103 are connected to each other by using a wired network or a wireless network. The control device 103 and the network device 102 are connected to each other by using a wired network or a wireless network.

Optionally, the control device 103 stores a network topology of the communication network managed by the control device 103. The control device 103 is further configured to: collect device information of the network device 102 in the communication network, an abnormal event generated in the communication network, and the like, and provide the analysis device 101 with the network topology of the communication network, the device information of the network device 102, the abnormal event generated in the communication network, and the like.

The device information of the network device 102 includes at least configuration information. The configuration information of the network device specifically includes interface configuration information, protocol configuration information, service configuration information, and/or the like. Optionally, the device information of the network device 102 may further include routing information, status information, and/or the like. The routing information of the network device specifically includes an address resolution protocol (Address Resolution Protocol, ARP) table, a media access control (Media Access Control, MAC) table, a routing table, and/or a forwarding table. The status information of the network device specifically includes protocol status information, tunnel status information, and/or the like. The protocol status information includes open shortest path first (open shortest path first, OSPF) protocol status information, border gateway protocol (Border Gateway Protocol, BGP) status information, link layer discovery protocol (link layer discovery protocol, LLDP) status information, and/or the like. The tunnel status information includes an identifier of a tunnel endpoint and a tunnel status.

Optionally, the control device 103 may periodically collect the device information of the network device 102 and the abnormal event generated in the communication network. For example, the control device may collect the device information of the network device and the abnormal event generated in the communication network by using a telecommunication network protocol (telnet for short), a simple network management protocol (simple network management protocol, SNMP), or a network telemetry (network telemetry) technology. Alternatively, when the device information of the network device 102 changes, the network device 102 actively reports changed device information to the control device 103. When the communication network has a fault, the network device 102 actively reports a generated abnormal event to the control device 103. Certainly, in some application scenarios, the analysis device 101 may also be integrated with the control device 103. That is, the analysis device 101 is directly connected to the network device 102 in the communication network. This is not limited in embodiments of this application.

The communication network provided in embodiments of this application may be a data center network (data center network, DCN), a metropolitan area network, a wide area network, a campus network, or the like. A type of the communication network is not limited in embodiments of this application. The communication network includes an underlay (underlay) network. The underlay network may be a physical network formed by the Internet (internet), a multi-protocol label switching (multi-protocol label switching, MPLS) network, a long term evolution (long term evolution, LTE) network, and/or the like. The underlay network includes a plurality of network devices, and the plurality of network devices are connected by using physical links.

Optionally, the communication network may further include an upper-layer network constructed above the underlay network, and the upper-layer network may also be referred to as a logical network or a virtual network. The upper-layer network may include an overlay (overlay) network and/or a control and provisioning of wireless access points (control and provisioning of wireless access points, CAPWAP) network.

The overlay network may be a network constructed on the basis of the underlay network by using a generic routing encapsulation (generic routing encapsulation, GRE) protocol, a virtual extensible local area network (virtual extensible local area network, VXLAN) protocol, a dynamic smart virtual private network (dynamic smart virtual private network, DSVPN) technology, an automatic virtual private network (automatic virtual private network, Auto VPN) technology, and/or the like. The overlay network includes a tunnel (which may also be referred to as an overlay tunnel), and the tunnel is a virtual or logical link. Each tunnel corresponds to one or more paths in the underlay network, and each path is usually formed by a plurality of connected physical links in the underlay network.

The CAPWAP network includes a CAPWAP tunnel. The CAPWAP tunnel is usually established between an access point (access point, AP) and an access controller (access controller, AC). The CAPWAP tunnel is divided into a data channel and a control channel. The data channel is used to transmit a service packet (that is, a user data packet), and the control channel is used to transmit a management packet (also referred to as a control packet).

The communication network provided in embodiments of this application may use a layer 2 network architecture or a layer 3 network architecture. In the layer 2 network architecture, the communication network includes an aggregation layer and an access layer. The communication network may also be referred to as a layer 2 network. The aggregation layer is a high-speed switching backbone of the communication network, and the access layer is configured to connect a workstation to the communication network. In the layer 3 network architecture, the communication network includes a core layer, an aggregation layer, and an access layer. The communication network may also be referred to as a layer 3 network. The core layer is a high-speed switching backbone of the communication network, the aggregation layer is configured to provide an aggregation connection (connecting the access layer and the core layer), and the access layer is configured to connect a workstation to the communication network. The workstation may include a terminal, an AP, a server, a virtual machine (virtual machine, VM), or the like. The terminal may be a mobile phone, a computer, or the like.

For example, FIG. 2 is a schematic diagram of a structure of a communication network according to an embodiment of this application. As shown in FIG. 2, the communication network 20 includes a core layer network device 102a, aggregation layer network devices 102b1 and 102b2, and access layer network devices 102c1 and 102c2. The access layer network device 102c1 is connected to an AP 104, the AP 104 is connected to a terminal 105a, and the access layer network device 102c2 is connected to a virtual machine 105b.

Still refer to FIG. 2. The access layer network device 102c1 has an interface GE1/0/0.1 and an interface GE1/1/0, the aggregation layer network device 102b1 has an interface GE1/2/0 and an interface GE1/3/0, the core layer network device 102a has an interface GE1/4/0, an interface GE1/5/0, and an interface GE1/6/0, the aggregation layer network device 102b2 has an interface GE1/7/0 and an interface GE1/8/0, and the access layer network device 102c2 has an interface GE1/0/1.1 and an interface GE1/9/0. The interface GE1/0/0.1 on the access layer network device 102c1 and the interface GE1/0/1.1 on the access layer network device 102c2 are boundary interfaces. The access layer network device 102c1 is connected to the AP 104 by using the interface GE1/0/0.1, and the access layer network device 102c2 is connected to the virtual machine 105b by using the interface GE1/0/1.1. The interface GE1/1/0 of the access layer network device 102c1 is connected to the interface GE1/2/0 of the aggregation layer network device 102b1. The interface GE1/3/0 of the aggregation layer network device 102b1 is connected to the interface GE1/4/0 of the core layer network device 102a. The interface GE1/6/0 of the core layer network device 102a is connected to the interface GE1/7/0 of the aggregation layer network device 102b2. The interface GE1/8/0 of the aggregation layer network device 102b2 is connected to the interface GE1/9/0 of the access layer network device 102c2.

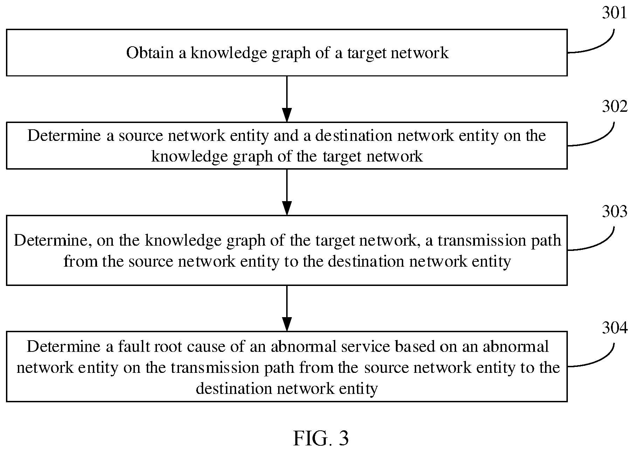

FIG. 3 is a schematic flowchart of a path determining method according to an embodiment of this application. The method may be applied to the analysis device 101 in the application scenario shown in FIG. 1. As shown in FIG. 3, the method includes the following steps.

Step 301: Obtain a knowledge graph of a target network.

The knowledge graph includes a plurality of knowledge graph triplets. Each knowledge graph triplet includes two network entities and a relationship between the two network entities. A type of the network entity is a device, an interface, a protocol, or a service.

Optionally, a network entity whose type is a device may be represented by using a name of the device, a MAC address, a hardware address, an OSPF router (OsRouter for short, which may uniquely identify a network device at an OSPF layer), or another identifier that can uniquely identify the device. A network entity whose type is an interface may be represented by using a name of the interface. A network entity whose type is a protocol may be represented by using an identifier of the protocol. The knowledge graph triplet is represented in a form of a graph. The knowledge graph triplet includes two basic elements: nodes and an edge. The nodes represent network entities, and the edge represents an association relationship between two network entities. The edge in the knowledge graph triplet may be directional or directionless. The edge in the knowledge graph triplet may be further used to represent a specific relationship, for example, a dependency relationship or an equivalence relationship, between the two network entities. For example, when the two network entities are in an equivalence relationship, a directionless edge may be used to connect the two network entities. When two network entities are in a dependency relationship, a directional edge (for example, an arrow) may be used to connect the two network entities, where a direction of the edge points from a dependent network entity to a depended network entity.

Each network entity has its own configuration. For example, an interface is configured with attributes such as an interface status, an interface name, an Internet Protocol (Internet Protocol, IP) address, and/or whether to join a VLAN. A relationship is established between network entities based on configurations and physical links. The following describes the relationship between network entities by using an example: The network device has an interface, that is, the interface depends on the network device; the interface of the network device may carry a forwarding service, that is, the forwarding service depends on the interface; a layer 3 forwarding service may carry a VXLAN tunnel, a traffic engineering (traffic engineering, TE) tunnel, and a BGP, that is, the VXLAN tunnel, the TE tunnel, and the BGP depend on the layer 3 forwarding service; the TE tunnel may carry a VPN service, that is, the VPN service depends on the TE tunnel; and the like. The layer 3 forwarding service may carry the VXLAN tunnel, indicating that an interface carrying the layer 3 forwarding service may be used as an endpoint of the VXLAN tunnel. The layer 3 forwarding service may carry the TE tunnel, indicating that the interface carrying the layer 3 forwarding service may be used as an endpoint of the TE tunnel. The layer 3 forwarding service may carry the BGP, indicating that the interface carrying the layer 3 forwarding service may receive and send a BGP-based protocol packet. The TE tunnel may carry the VPN service, indicating that an interface carrying the TE tunnel may support the VPN service.

Optionally, an implementation process of step 301 includes: The analysis device generates the knowledge graph of the target network based on network data of the target network. The network data includes a network topology of the target network and device information of a plurality of network devices in the target network. The device information of the network device includes configuration information. Interface configuration information of the network device may include an IP address of an interface, a protocol type supported by the interface, a service type supported by the interface, and the like. Protocol configuration information of the network device may include an identifier of a protocol. An identifier of the protocol is used to uniquely identify the protocol. The identifier of the protocol may be represented by using a character, a letter, a number, and/or the like. Service configuration information of the network device may include a service used by the network device, for example, a virtual private network (virtual private network, VPN) service and/or a dynamic host configuration protocol (Dynamic Host Configuration Protocol, DHCP) service. The device information of the network device may further include status information, routing information, and/or the like of the network device.

Optionally, the analysis device periodically obtains the device information of the network device in the target network, and generates the knowledge graph of the target network. After generating the knowledge graph of the target network, the analysis device may further store the knowledge graph of the target network in the analysis device or a storage device connected to the analysis device, for subsequent use. For example, the knowledge graph of the target network may be used as a basis for determining a fault propagation relationship between network entities, and/or used as a basis for fault root cause inference. For example, when the target network has a fault in a period, the analysis device may identify, on a knowledge graph corresponding to the period, an abnormal network entity that generates an abnormal event, to obtain a knowledge graph on which the abnormal network entity is identified, thereby improving efficiency of obtaining the knowledge graph on which the abnormal network entity is identified.

Certainly, the knowledge graph of the target network may alternatively be generated by another device based on the network data of the target network and then sent to the analysis device. This is not limited in this embodiment of this application.

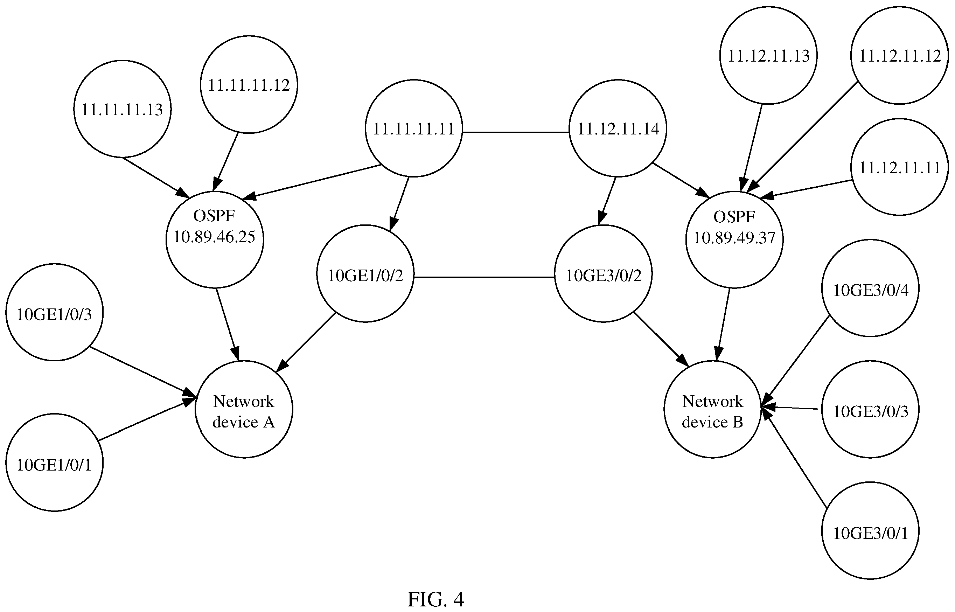

For example, it is assumed that the target network includes two network devices: a network device A and a network device B. The network device A has three interfaces, and names of the three interfaces are: 10GE1/0/1, 10GE1/0/2, and 10GE1/0/3. The network device B has four interfaces, and names of the four interfaces are: 10GE3/0/1, 10GE3/0/2, 10GE3/0/3, and 10GE3/0/4. Both the network device A and the network device B support an OSPF protocol. An identifier of the OSPF protocol in the network device A is represented by 10.89.46.25, and the OSPF protocol in the network device A includes three route IP addresses: 11.11.11.11, 11.11.11.12, and 11.11.11.13. An identifier of the OSPF protocol in the network device B is represented by 10.89.49.37, and the OSPF protocol in the network device B includes four route IP addresses: 11.12.11.11, 11.12.11.12, 11.12.11.13, and 11.12.11.14. The interface "10GE1/0/2" of the network device A is connected to the interface "10GE3/0/2" of the network device B, and the OSPF protocol is used for communication between the two interfaces. The interface "10GE1/0/2" of the network device A uses the route IP address 11.11.11.11, and the interface "10GE3/0/2" of the network device B uses the route IP address 11.12.11.14. Therefore, a knowledge graph shown in FIG. 4 may be obtained based on the foregoing network data.

Optionally, the abnormal network entity that generates the abnormal event in the target network is identified on the knowledge graph of the target network. A type of the abnormal event includes one or more of an alarm log, a status change log, and an abnormal key performance indicator (key performance indicator, KPI). The alarm log includes an identifier of the abnormal network entity in the network device and an alarm type. The status change log includes configuration file change information, routing entry change information, and/or the like. For example, the status change log may include information, for example, "an access sub-interface is deleted" or "a destination IP address host route is deleted". The abnormal KPI is used to describe an abnormal indicator of a network entity.

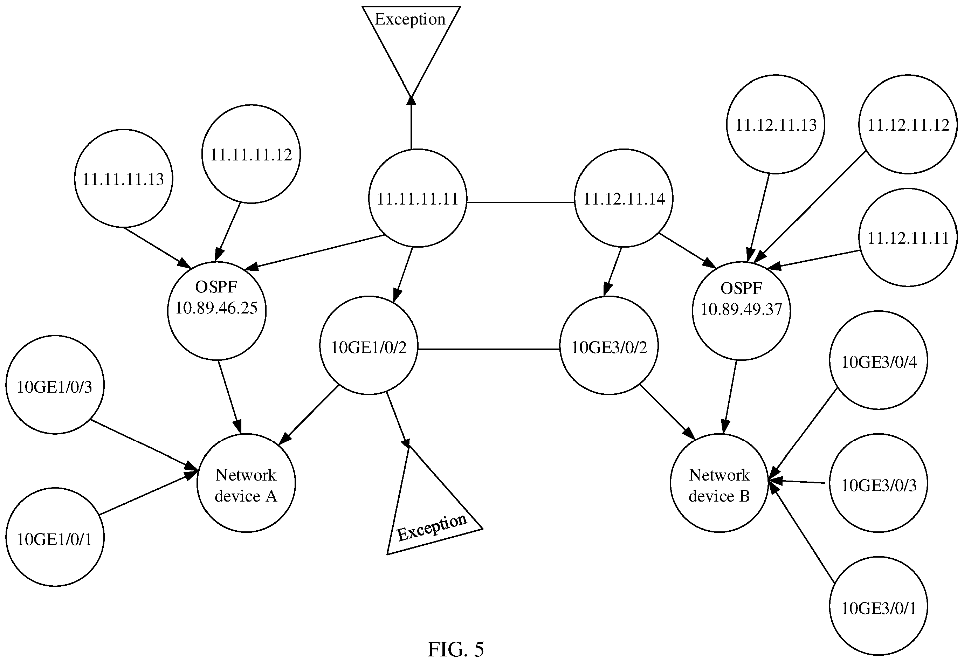

For example, with reference to the example shown in FIG. 4, it is assumed when the interface "10GE1/0/2" of the network device A has a fault, and the route IP address "11.11.11.11" is unreachable, the target network has a fault. In this case, a network entity corresponding to the interface "10GE1/0/2" and a network entity corresponding to the route IP address "11.11.11.11" may be identified as abnormal network entities on the knowledge graph. With reference to FIG. 5, an abnormal event entity may be connected to an abnormal network entity to identify the abnormal network entity. The abnormal event entity may be distinguished from the network entity by using a special graph or a special color. For example, with reference to FIG. 5, a triangle may be used to represent the abnormal event entity. Alternatively, the abnormal event entity may include specific content of an abnormal event, so that operation and maintenance personnel quickly obtain an abnormal object and a specific exception type in the target network based on the knowledge graph.

Optionally, network entities on the knowledge graph of the target network include a physical entity and a logical entity. The physical entity includes a physical device and/or a physical interface. The logical entity includes one or more of a logical device, a logical interface, a protocol, and a service.

For example, in the knowledge graph shown in FIG. 4, physical entities include physical devices and physical interfaces, the physical devices include the network device A and the network device B, and the physical interfaces include 10GE1/0/1, 10GE1/0/2, 10GE1/0/3, 10GE3/0/1, 10GE3/0/2, 10GE3/0/3, and 10GE3/0/4. Logical entities include protocols and logical interfaces. The protocols include OSPF 10.89.46.25 and OSPF 10.89.49.37. The logical interfaces are represented by using allocated route IP addresses. The logical interfaces include 11.11.11.11, 11.11.11.12, 11.11.11.13, 11.12.11.11, 11.12.11.12, 11.12.11.13, and 11.12.11.14.

In this embodiment of this application, the knowledge graph of the target network may include only a network entity corresponding to a network device in the target network, or the knowledge graph of the target network may include the network entity corresponding to the network device in the target network and a network entity corresponding to a terminal, an AP, a server, or a virtual machine that accesses the target network.

Step 302: Determine a source network entity and a destination network entity on the knowledge graph of the target network.

Optionally, the analysis device first determines a source device and a destination device that access the target network, then determines the source network entity based on the source device, and determines the destination network entity based on the destination device. The following separately describes an implementation process in which the analysis device determines the source network entity based on the source device and an implementation process in which the analysis device determines the destination network entity based on the destination device.

Optionally, the analysis device may determine the source network entity based on access information of the source device. The access information of the source device includes an identifier of the source device. The identifier of the source device may be a MAC address, an IP address, or the like of the source device.

In this embodiment of this application, when the source device is a wired device, for example, the source device is a server or a virtual machine, the source device is wiredly connected to a network device in the target network to access the target network, and the network device that connects the source device to the target network may report the access information of the source device to the analysis device. When the source device is a wireless device, for example, the source device is a mobile phone, the source device is associated with an AP, and the AP is wiredly connected to an access layer network device in the target network to connect the source device to the target network. The access layer network device or an AC configured to manage the AP may report the access information of the source device to the analysis device. The access information of the source device may further include interface information of the network device that connects the source device to the target network and/or quintuple information, triplet information, and the like of the source device. When the source device is a wireless device, the access information of the source device may further include one or more of an identifier of an AP associated with the source device, a radio identifier used by the source device, and a service set identifier (service set identifier, SSID) of the AP associated with the source device.

Optionally, the source network entity may be the source device, or the source network entity may be a first interface of a first network device in the target network, and the first interface of the first network device is configured to connect the source device to the target network. If the knowledge graph of the target network includes the network entity corresponding to the source device and the network entity corresponding to the network device in the target network, the analysis device determines that the source network entity is the source device. If the knowledge graph of the target network includes only the network entity corresponding to the network device in the target network, when the source device is a wired device, the analysis device determines that the source network entity is an interface of the network device that is in the target network and that is connected to the source device; or when the source device is a wireless device, the analysis device determines that the source network entity is an interface of the network device connected to the AP that is in the target network and that is associated with the source device.

In this embodiment of this application, the analysis device determines the destination network entity based on the destination device in the following two implementations:

In a first implementation, the analysis device may determine the destination network entity based on the access information of the destination device. The access information of the destination device includes an identifier of the destination device. The destination network entity may be the destination device, or the destination network entity may be a second interface of a second network device in the target network, and the second interface of the second network device is configured to connect the destination device to the target network. For a manner in which the analysis device obtains the access information of the destination device and an implementation in which the analysis device determines the destination network entity based on the access information of the destination device, respectively refer to the foregoing manner in which the analysis device obtains the access information of the source device and the foregoing implementation in which the analysis device determines the source network entity based on the access information of the source device. Details are not described herein again in this embodiment of this application.

In a second implementation, the destination device is a DHCP server or a DHCP relay device. The analysis device may obtain a target VLAN corresponding to a DHCP service of the source device. When the target VLAN has a binding relationship with a target layer 2 forwarding instance, the analysis device determines that the destination network entity is a layer 3 virtual interface that is on a core network device in the target network and that corresponds to the target layer 2 forwarding instance. The target layer 2 forwarding instance is any layer 2 forwarding instance other than the VLAN instance. For example, the target layer 2 forwarding instance is a bridge domain (bridge domain, BD) instance. When the target VLAN has no binding relationship with any layer 2 forwarding instance other than the VLAN instance, the analysis device determines that the destination network entity is a VLAN interface that is on the core network device in the target network and that corresponds to the target VLAN. The VLAN interface may also be referred to as vlanif.

Optionally, one or more forwarding instances are configured in the network device, and one forwarding instance corresponds to a group of locally valid routing information on the network device. Each forwarding instance in a same network device works independently to implement route isolation. The network device may include a layer 2 forwarding instance (L2VPN instance) and/or a layer 3 forwarding instance (L3VPN instance). The layer 2 forwarding instance corresponds to layer 2 routing information on the network device, for example, a MAC table; and the layer 3 forwarding instance corresponds to layer 3 routing information on the network device, for example, a forwarding table. The VLAN instance is a layer 2 forwarding instance. In a VXLAN, the L2VPN instance may also be referred to as a BD instance (corresponding to a layer 2 forwarding domain). The L3VPN instance may also be referred to as a virtual routing forwarding (virtual routing forwarding, VRF) instance (corresponding to a layer 3 forwarding domain). In this embodiment of this application, the target layer 2 forwarding instance may be a BD instance, and the layer 3 virtual interface corresponding to the BD instance is a BD-based logical interface, which may be briefly referred to as vbdif.

For example, if the target VLAN corresponding to the DHCP service of the source device has a binding relationship with the BD instance, it indicates that a DHCP packet of the source device is forwarded through the VXLAN tunnel. The analysis device may find the corresponding BD instance on the core network device, and then use vbdif bound to the BD instance as the destination network entity. If the target VLAN corresponding to the DHCP service has no binding relationship with the BD instance, it indicates that the DHCP packet of the source device is not forwarded through the VXLAN tunnel. The analysis device may find the corresponding VLAN instance on the core network device, and then use vlanif bound to the VLAN instance as the destination network entity. Certainly, if the knowledge graph of the target network includes a DHCP server or a DHCP relay device, the analysis device may also use the DHCP server or the DHCP relay device connected to vbdif or vlanif that is bound to the layer 2 forwarding instance and that is on the core network device as the destination network entity.

Optionally, when the source device is a wireless device, an implementation process in which the analysis device obtains the target VLAN corresponding to the DHCP service of the source device includes: The analysis device determines a service VLAN corresponding to the source device based on one or more of an identifier of an access point associated with the source device, a radio identifier used by the source device, and a service set identifier of the access point associated with the source device, and uses the service VLAN corresponding to the source device as the target VLAN.

Optionally, the analysis device may determine the source device and the destination device in the target network based on the abnormal event generated in the target network. The abnormal event includes access information of an abnormal service and a service type of the abnormal service. The access information of the abnormal service includes access information of the source device that carries the abnormal service and/or access information of the destination device that carries the abnormal service. A service type of the abnormal service includes a DHCP service, an associated service, an authentication service, audio and video services, or the like. The associated service and the authentication service respectively mean association and authentication between a terminal and an AP in a wireless local area network. The abnormal event generated in the target network may be generated by the analysis device based on a log, an alarm, or the like reported by the network device and/or the AP. Alternatively, the abnormal event generated in the target network may be input externally.

For example, when the DHCP of a wireless device in the target network times out due to an OsRouter ID conflict, the AP and the network device that is in the target network report related logs and alarms such as a DHCP exception and an OSPF exception of the wireless device, and the analysis device may generate a DHCP timeout abnormal event based on these logs and alarms. For example, the DHCP timeout abnormal event may be represented as follows:

```
         { "name": "dhcp-timeout"
         "ssid": "1x-135","ap_name": "AP2","sta_mac": "6480-9915-cd9b","radio_id": "1" }
```

A service type of an abnormal service included in the abnormal event is a DHCP service, and a cause of exception is DHCP timeout. The MAC address of the source device is 6480-9915-cd9b, the radio identifier used by the source device is 1, the AP associated with the source device is AP2, and the SSID of the AP associated with the source device is 1x-135. It can be learned based on the abnormal event that, the source device is a terminal whose MAC address is 6480-9915-cd9b, and the destination device is the DHCP server or the DHCP relay device.

In this embodiment of this application, the operation and maintenance personnel may alternatively directly specify the source network entity and the destination network entity on the knowledge graph, or the operation and maintenance personnel may input the access information of the source device to the analysis device, so that the analysis device determines the source network entity, and/or the operation and maintenance personnel input the access information of the destination device to the analysis device, so that the analysis device determines the destination network entity. The manner in which the analysis device determines the source network entity and the destination network entity on the knowledge graph of the target network is not limited in this embodiment of this application.

Step 303: Determine, on the knowledge graph of the target network, a transmission path from the source network entity to the destination network entity.

The transmission path that is from the source network entity to the destination network entity and that is determined on the knowledge graph of the target network belongs to the knowledge graph of the target network. In other words, the transmission path is a subgraph of the knowledge graph of the target network. Network entities on the transmission path include a physical entity and a logical entity. There may be one or more transmission paths from the source network entity to the destination network entity.

A currently determined transmission path usually includes only hardware such as a physical device and a physical interface. However, the transmission path determined in this embodiment of this application not only includes a physical entity such as a physical device and/or a physical interface, but also includes a logical entity such as a logical device (for example, a logical switch BD, or a logical router VPN), a logical interface (for example, vlanif, vbdif, a network virtualization edge (network virtualization edge, NVE), or LoopBack), a protocol (for example, OSPF, or BGP), and/or a service (for example, a tunnel service, a VXLAN tunnel, or a CAPWAP tunnel). The transmission path can reflect a protocol, a service, and the like that are used for communication between the source device and the destination device. The transmission path includes more information, to facilitate subsequent network analysis.

Optionally, an implementation process of step 303 includes: The analysis device determines, based on a network passed through from the source device to the destination device and the knowledge graph of the target network, an intermediate network entity passed through from the source network entity to the destination network entity, where the network passed through from the source device to the destination device includes an underlay network. Then, the analysis device determines the transmission path based on the intermediate network entity passed through from the source network entity to the destination network entity. The transmission path includes the source network entity, the destination network entity, and the intermediate network entity. The transmission path may include all intermediate network entities determined by the analysis device.

Optionally, the network passed through from the source device to the destination device further includes an upper-layer network. The upper-layer network includes an overlay network and/or a CAPWAP network. When the network passed through from the source device to the destination device includes the overlay network, the analysis device may determine, on the knowledge graph based on a tunnel endpoint of a tunnel passed through from the source device to the destination device in the overlay network, an overlay network entity corresponding to the tunnel and an underlay network entity that carries the tunnel. The overlay network entity is a corresponding network entity in the overlay network, for example, a BD instance or vbdif; and the underlay network entity is a corresponding network entity in the underlay network, for example, a physical device, a physical interface, OSPF, or BGP.

For example, refer to the example shown in FIG. 2. It is assumed that the source device is a terminal 105a, the destination device is a DHCP server (not shown in the figure) connected to a core layer network device 102a, and the overlay network passed through from the source device to the destination device runs a VXLAN protocol. A VXLAN tunnel endpoint (VXLAN tunnel endpoint, VTEP) 1 is configured in an access layer network device 102c1, and a VTEP 2 is configured in the core layer network device 102a. A VXLAN tunnel connection is established between the access layer network device 102c1 and the core layer network device 102a based on the VTEP 1 and the VTEP 2. A tunnel is unidirectional. Generally, two tunnels in opposite directions are established between two network devices, to implement bidirectional communication. It is assumed that a BD instance is configured in both the access layer network device 102c1 and the core layer network device 102a. An identifier of the BD instance in the access layer network device 102c1 is 10, the BD instance is BD 10 for short, and an NVE connected to BD 10 in the access layer network device 102c1 is NVE 1 for short. An identifier of the BD instance in the core layer network device 102a is 20, the BD instance is BD 20 for short, and an NVE connected to BD 20 in the core layer network device 102a is NVE 2 for short. The analysis device determines that overlay network entities corresponding to the tunnel on the knowledge graph include BD 10, NVE 1, NVE 2, and BD 20, and underlay network entities that carry the tunnel include the access layer network device 102c1, an interface GE1/1/0, an interface GE1/2/0, an aggregation layer network device 102b1, an interface GE1/3/0, an interface GE1/4/0, and the core layer network device 102a. That is, the analysis device may determine that network entities passed through from the terminal 105a to the DHCP server include: the access layer network device 102c1, the interface GE1/1/0, the interface GE1/2/0, the aggregation layer network device 102b1, the interface GE1/3/0, the interface GE1/4/0, the core layer network device 102a, and BD 10, NVE 1, NVE 2, and BD 20.

Optionally, a packet between the source device and the destination device may be transmitted in a forwarding mode such as layer 2 forwarding, layer 3 forwarding, VXLAN tunnel forwarding, or CAPWAP tunnel forwarding, and the analysis device may determine the forwarding mode based on a specific configuration of the network device in the target network. In this embodiment of this application, the analysis device may determine, based on an access manner in which the source device accesses the target network, a network passed through from the source device to the destination device, and further determine the forwarding mode of the packet between the source device and the destination device.

In an optional embodiment of this application, an access manner in which the source device accesses the target network is wired access. When an interface of a network device that is in the target network and that is connected to the source device has a binding relationship with the target layer 2 forwarding instance, the analysis device determines that the overlay network is passed through from the source device to the destination device. When the interface of the network device that is in the target network and that is connected to the source device has no binding relationship with the target layer 2 forwarding instance, the analysis device determines that the overlay network is not passed through from the source device to the destination device. The target layer 2 forwarding instance is any layer 2 forwarding instance other than the VLAN instance, for example, a BD instance.

In this embodiment, when the overlay network is passed through from the source device to the destination device, the analysis device determines that the transmission path from the source device to the destination device includes an underlay network entity and an overlay network entity. If the overlay network runs a VXLAN protocol, the analysis device determines that a packet between the source device and the destination device is forwarded by using a VXLAN tunnel. When the overlay network is not passed through from the source device to the destination device, the analysis device determines that the transmission path from the source device to the destination device includes only the underlay network entity.

In another optional embodiment of this application, an access manner in which the source device accesses the target network is wireless access. When a type of a packet between the source device and the destination device is a management packet, the analysis device determines that the CAPWAP network is passed through from the source device to the destination device. When a type of a packet between the source device and the destination device is a service packet, the service packet uses a direct forwarding manner, and a service VLAN corresponding to the service packet has a binding relationship with the target layer 2 forwarding instance, the analysis device determines that the overlay network is passed through from the source device to the destination device. The target layer 2 forwarding instance is any layer 2 forwarding instance other than the VLAN instance, for example, a BD instance. When a type of a packet between the source device and the destination device is a service packet, and the service packet uses a tunnel forwarding manner, the analysis device determines that the CAPWAP network is passed through from the source device to the destination device. Direct forwarding may also be referred to as local forwarding, and tunnel forwarding may also be referred to as centralized forwarding. A service packet that uses the direct forwarding manner does not pass through the CAPWAP tunnel, and a service packet that uses the tunnel forwarding manner passes through the CAPWAP tunnel.

In this embodiment, the analysis device determines that the management packet between the source device and the destination device is forwarded by using a CAPWAP tunnel. A transmission path of the management packet includes an underlay network entity and a CAPWAP network entity. The analysis device determines that a service packet that uses a tunnel forwarding manner between the source device and the destination device is forwarded by using the CAPWAP tunnel. A transmission path of the service packet includes the underlay network entity and the CAPWAP network entity. If the service packet between the source device and the destination device uses a direct forwarding manner, when the overlay network is passed through from the source device to the destination device, the analysis device determines that the transmission path of the service packet includes the underlay network entity and the overlay network entity; or when the overlay network is not passed through from the source device to the destination device, the analysis device determines that the transmission path of the service packet includes only the underlay network entity. The CAPWAP network entity is a corresponding network entity in the CAPWAP network. Whether service packet is forwarded in the direct forwarding manner or the tunnel forwarding manner depends on a specific configuration of an AP.

In this embodiment of this application, the knowledge graph of the network includes the knowledge graph triplets, and another network entity that has a relationship with one network entity can be found by using the network entity. Therefore, after the source network entity and the destination network entity on the knowledge graph are obtained, the transmission path from the source network entity to the destination network entity can be determined based on the relationship between the network entities. When the source network entity is a network entity corresponding to the source device, and the destination network entity is a network entity corresponding to the destination device, a transmission path from the source network entity to the destination network entity is the transmission path from the source device to the destination device. In this embodiment of this application, when the transmission path between the two devices is determined, there is no need to depend on a service packet transmission scenario, and therefore path determining flexibility is high. In addition, in this embodiment of this application, all transmission paths from the source network entity to the destination network entity can be found by searching the knowledge graph. This may be applied to more scenarios, for example, an equal-cost multi-path (equal-cost multi-path, ECMP) scenario.

Optionally, when the abnormal network entity that generates the abnormal event in the target network is identified on the knowledge graph of the target network, after determining, on the knowledge graph of the target network, the transmission path from the source network entity that corresponds to the abnormal event to the destination network entity, the analysis device may further perform the following step 304.

Step 304: Determine a fault root cause of the abnormal service based on the abnormal network entity on the transmission path from the source network entity to the destination network entity.

For example, the analysis device first determines, on the knowledge graph of the target network, the transmission path of the DHCP packet based on the DHCP timeout abnormal event in step 302, and then performs inference based on the abnormal network entity mounted with the abnormal event on the transmission path, to obtain a conclusion: The OsRouter ID conflict causes a DHCP timeout of the wireless device.

In this embodiment of this application, because the abnormal network entity is identified on the transmission path determined by the analysis device, the analysis device may further determine a network entity having a root cause fault on the transmission path based on a fault propagation rule, to determine the fault root cause of the abnormal service, and implement end-to-end fault root cause locating. In addition, after determining the transmission path on the knowledge graph of the target network based on the abnormal event generated in the target network, the analysis device can detect, in real time, a fault that is in the target network and that causes the abnormal event, and fault locating efficiency is high. The fault propagation rule may be obtained based on expert experience.

In addition, because a network entity on the knowledge graph of the target network may be mounted with various related abnormal events, another technology such as iFIT or data plane verification (data plane verification, DPV) may be used to generate a quality abnormal event and/or an entry abnormal event, and then the quality abnormal event and/or the entry abnormal event are mounted on a corresponding network entity. After generating the transmission path, the analysis device can locate more types of fault root causes by using an inference engine, to facilitate expansion.

A sequence of the steps of the path determining method provided in this embodiment of this application may be properly adjusted, or the steps may be correspondingly added or deleted based on a situation. Any variation method readily figured out by a person skilled in the art within the technical scope disclosed in this application shall fall within the protection scope of this application.

In conclusion, in the path determining method provided in this embodiment of this application, the knowledge graph of the network includes the knowledge graph triplets, and another network entity that has a relationship with one network entity can be found by using the network entity. Therefore, after obtaining the source network entity and the destination network entity on the knowledge graph, the analysis device can determine the transmission path from the source network entity to the destination network entity based on the relationship between the network entities. When the source network entity is a network entity corresponding to the source device, and the destination network entity is a network entity corresponding to the destination device, a transmission path from the source network entity to the destination network entity is the transmission path from the source device to the destination device. In this embodiment of this application, when the transmission path between the two devices is determined, there is no need to depend on a service packet transmission scenario, and therefore path determining flexibility is high. In addition, in this embodiment of this application, all transmission paths from the source network entity to the destination network entity can be found by searching the knowledge graph. This may be applied to more scenarios, for example, an ECMP scenario. Further, because the abnormal network entity is identified on the transmission path determined by the analysis device, the analysis device may further determine a network entity having a root cause fault on the transmission path based on a fault propagation rule, to determine the fault root cause of the abnormal service, and implement end-to-end fault root cause locating. In addition, after determining the transmission path on the knowledge graph of the target network based on the abnormal event generated in the target network, the analysis device can detect, in real time, a fault that is in the target network and that causes the abnormal event, and fault locating efficiency is high.

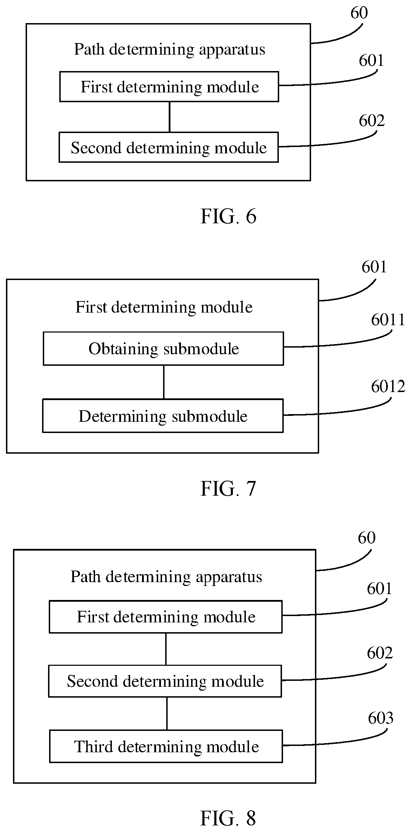

FIG. 6 is a schematic diagram of a structure of a path determining apparatus according to an embodiment of this application. The apparatus may be the analysis device 101 in the application scenario shown in FIG. 1. As shown in FIG. 6, the apparatus 60 includes:
a first determining module 601, configured to determine a source network entity and a destination network entity on a knowledge graph of a target network, where the knowledge graph includes a plurality of knowledge graph triplets, each knowledge graph triplet includes two network entities and a relationship between the two network entities, and a type of the network entity is a device, an interface, a protocol, or a service; and
a second determining module 602, configured to determine, on the knowledge graph, a transmission path from the source network entity to the destination network entity.

Optionally, network entities on the transmission path include a physical entity and a logical entity, the physical entity includes a physical device and/or a physical interface, and the logical entity includes one or more of a logical device, a logical interface, a protocol, and a service.

Optionally, the first determining module 601 is configured to: determine a source device and a destination device that access the target network; and determine the source network entity based on the source device, and determine the destination network entity based on the destination device.

Optionally, the first determining module 601 is configured to determine the source network entity based on access information of the source device, where the access information of the source device includes an identifier of the source device.

Optionally, the source network entity is the source device, or the source network entity is a first interface of a first network device in the target network, and the first interface of the first network device is configured to connect the source device to the target network.

Optionally, the first determining module 601 is configured to determine the destination network entity based on access information of the destination device, where the access information of the destination device includes an identifier of the destination device.

Optionally, the destination network entity is the destination device, or the destination network entity is a second interface of a second network device in the target network, and the second interface of the second network device is configured to connect the destination device to the target network.

Optionally, as shown in FIG. 7, the first determining module 601 includes:
an obtaining submodule 6011, configured to obtain a target VLAN corresponding to a DHCP service of the source device; and
a determining submodule 6012, configured to: when the target VLAN has a binding relationship with a target layer 2 forwarding instance, determine that the destination network entity is a layer 3 virtual interface that is on a core network device in the target network and that corresponds to the target layer 2 forwarding instance, where the target layer 2 forwarding instance is any layer 2 forwarding instance other than a VLAN instance; and the determining submodule 6012 is further configured to: when the target VLAN has no binding relationship with any layer 2 forwarding instance other than the VLAN instance, determine that the destination network entity is a VLAN interface that is on the core network device in the target network and that corresponds to the target VLAN.

Optionally, the source device is a wireless device, and the obtaining submodule 6011 is configured to: determine a service VLAN corresponding to the source device based on one or more of an identifier of an access point associated with the source device, a radio identifier used by the source device, and a service set identifier of the access point associated with the source device, and use the service VLAN corresponding to the source device as the target VLAN.

Optionally, the second determining module 602 is configured to: determine, based on a network passed through from the source device to the destination device and the knowledge graph, an intermediate network entity passed through from the source network entity to the destination network entity, where the network passed through from the source device to the destination device includes an underlay network; and determine the transmission path based on the intermediate network entity passed through from the source network entity to the destination network entity, where the transmission path includes the source network entity, the destination network entity, and the intermediate network entity.

Optionally, the network passed through from the source device to the destination device further includes an upper-layer network, the upper-layer network is constructed above the underlay network, and the upper-layer network includes an overlay network and/or a CAPWAP network.

Optionally, an access manner in which the source device accesses the target network is wired access. As shown in FIG. 8, the apparatus 60 further includes:
a third determining module 603, configured to: when an interface of a network device that is in the target network and that is connected to the source device has a binding relationship with the target layer 2 forwarding instance, determine that the overlay network is passed through from the source device to the destination device, where the target layer 2 forwarding instance is any layer 2 forwarding instance other than the VLAN instance.

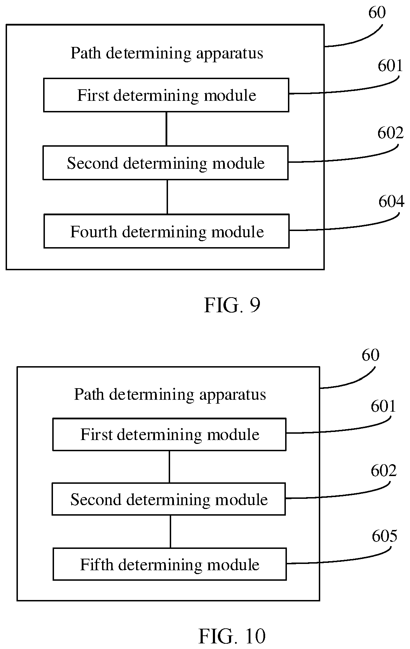

Optionally, an access manner in which the source device accesses the target network is wireless access. As shown in FIG. 9, the apparatus 60 further includes:
a fourth determining module 604, configured to: when a type of a packet between the source device and the destination device is a management packet, determine that the CAPWAP network is passed through from the source device to the destination device; the fourth determining module 604 is further configured to: when a type of a packet between the source device and the destination device is a service packet, the service packet uses a direct forwarding manner, and a service VLAN corresponding to the service packet has a binding relationship with the target layer 2 forwarding instance, determine that the overlay network is passed through from the source device to the destination device, and the target layer 2 forwarding instance is any layer 2 forwarding instance other than the VLAN instance; and the fourth determining module 604 is further configured to: when a type of a packet between the source device and the destination device is a service packet, and the service packet uses a tunnel forwarding manner, determine that the CAPWAP network is passed through from the source device to the destination device.

Optionally, when the network passed through from the source device to the destination device includes the overlay network, the second determining module 602 is configured to: determine, on the knowledge graph based on a tunnel endpoint of a tunnel passed through from the source device to the destination device in the overlay network, an overlay network entity corresponding to the tunnel and an underlay network entity that carries the tunnel.

Optionally, the first determining module 601 is configured to determine the source device and the destination device in the target network based on an abnormal event generated in the target network, where the abnormal event includes access information of an abnormal service and a service type of the abnormal service, and the access information of the abnormal service includes access information of the source device that carries the abnormal service and/or access information of the destination device that carries the abnormal service.

Optionally, an abnormal network entity that generates the abnormal event in the target network is identified on the knowledge graph. As shown in FIG. 10, the apparatus 60 further includes:
a fifth determining module 605, configured to: after the transmission path from the source network entity to the destination network entity is determined on the knowledge graph, determine a fault root cause of the abnormal service based on the abnormal network entity on the transmission path.

Optionally, a type of the abnormal event includes one or more of an alarm log, a status change log, and an abnormal key performance indicator.

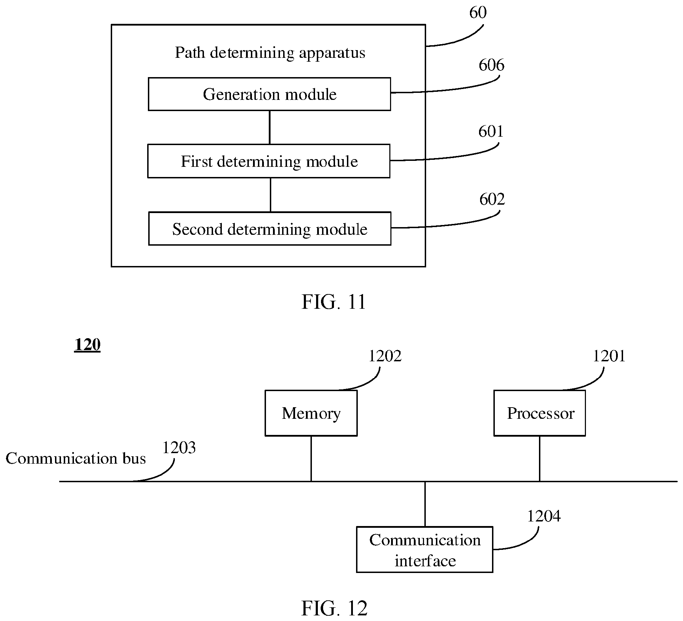

Optionally, as shown in FIG. 11, the apparatus 60 further includes:
a generation module 606, configured to generate the knowledge graph based on network data of the target network, where the network data includes a network topology of the target network and device information of a plurality of network devices in the target network, and the device information includes configuration information.

In conclusion, in the path determining apparatus provided in this embodiment of this application, the knowledge graph of the network includes the knowledge graph triplets, and another network entity that has a relationship with one network entity can be found by using the network entity. Therefore, after obtaining the source network entity and the destination network entity on the knowledge graph by using the first determining module, the analysis device can determine the transmission path from the source network entity to the destination network entity based on the relationship between the network entities by using the second determining module. When the source network entity is a network entity corresponding to the source device, and the destination network entity is a network entity corresponding to the destination device, a transmission path from the source network entity to the destination network entity is the transmission path from the source device to the destination device. In this embodiment of this application, when the transmission path between the two devices is determined, there is no need to depend on a service packet transmission scenario, and therefore path determining flexibility is high. In addition, in this embodiment of this application, all transmission paths from the source network entity to the destination network entity can be found by searching the knowledge graph. This may be applied to more scenarios, for example, an ECMP scenario. Further, because the abnormal network entity is identified on the transmission path determined by the analysis device, the analysis device may further determine a network entity having a root cause fault on the transmission path based on a fault propagation rule, to determine the fault root cause of the abnormal service, and implement end-to-end fault root cause locating. In addition, after determining the transmission path on the knowledge graph of the target network based on the abnormal event generated in the target network, the analysis device can detect, in real time, a fault that is in the target network and that causes the abnormal event, and fault locating efficiency is high.

For the apparatus in the foregoing embodiment, specific manners of performing operations by each module are described in detail in embodiments related to the method, and details are not described herein.

FIG. 12 is a block diagram of a path determining apparatus according to an embodiment of this application. The apparatus may be the analysis device 101 in the application scenario shown in FIG. 1. As shown in FIG. 12, the apparatus 120 includes a processor 1201 and a memory 1202.

The memory 1202 is configured to store a computer program, where the computer program includes program instructions.

The processor 1201 is configured to invoke the computer program to implement the path determining method in the foregoing method embodiment.

Optionally, the apparatus 120 further includes a communication bus 1203 and a communication interface 1204.

The processor 1201 includes one or more processing cores, and the processor 1201 executes various functional applications and performs data processing by running the computer program.

The memory 1202 may be configured to store the computer program. Optionally, the memory may store an operating system and an application program unit that is required for at least one function. The operating system may be an operating system such as real time executive (Real Time Executive, RTX), LINUX, UNIX, WINDOWS, or OS X.

There may be a plurality of communication interfaces 1204, and the communication interface 1204 is configured to communicate with another storage device or network device.

The memory 1202 and the communication interface 1204 are separately connected to the processor 1201 by using the communication bus 1203.

An embodiment of this application further provides a computer storage medium. The computer storage medium stores instructions. When the instructions are executed by a processor of a computer device, the path determining method in the foregoing method embodiment is implemented.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but cannot be understood as indicating or implying relative importance.

The term "and/or" in this application describes only an association relationship between associated objects, and indicates that three relationships may exist. For example, A and/or B may represent three cases: Only A exists, both A and B exist, and only B exists. In addition, the character "/" in this specification generally indicates an "or" relationship between the associated objects.

The foregoing descriptions are merely optional embodiments of this application, but are not intended to limit this application, the scope of the invention is defined by the appended claims. Any modification, equivalent replacement, improvement, or the like made within the scope of the appended claims shall fall within the protection scope of this application.

## Claims

1. A path determining method performed by an analysis device, wherein the method comprises:
determining (S302) a source network entity and a destination network entity on a knowledge graph of a target network, wherein the knowledge graph comprises a plurality of knowledge graph triplets, each knowledge graph triplet comprises two network entities and a relationship between the two network entities, and a type of a network entity is a device, an interface, a protocol, or a service; and
determining (S303), on the knowledge graph, a transmission path from the source network entity to the destination network entity;
wherein the determining a source network entity and a destination network entity on a knowledge graph of a target network comprises:
determining a source device and a destination device that access the target network; and
determining the source network entity based on the source device, and determining the destination network entity based on the destination device;
**characterized in that**:
the determining a source device and a destination device in the target network comprises:
determining the source device and the destination device in the target network based on an abnormal event generated in the target network, wherein the abnormal event comprises access information of an abnormal service and a service type of the abnormal service, and the access information of the abnormal service comprises access information of the source device that carries the abnormal service and/or access information of the destination device that carries the abnormal service;
wherein an abnormal network entity that generates the abnormal event in the target network is identified on the knowledge graph, and after the determining, on the knowledge graph, a transmission path from the source network entity to the destination network entity, and the method further comprises:
determining a fault root cause of the abnormal service based on the abnormal network entity on the transmission path.

2. The method according to claim 1, wherein network entities on the transmission path comprise a physical entity and a logical entity, the physical entity comprises a physical device and/or a physical interface, and the logical entity comprises one or more of a logical device, a logical interface, a protocol, and a service.

3. The method according to claim 1, wherein the determining the source network entity based on the source device comprises:
determining the source network entity based on access information of the source device, wherein the access information of the source device comprises an identifier of the source device.

4. The method according to claim 1 or 3, wherein the determining the destination network entity based on the destination device comprises:
determining the destination network entity based on access information of the destination device, wherein the access information of the destination device comprises an identifier of the destination device.

5. The method according to claim 1 or 3, wherein the determining the destination network entity based on the destination device comprises:
obtaining a target virtual local area network, VLAN, corresponding to a dynamic host configuration protocol, DHCP, service of the source device; and
when the target VLAN has a binding relationship with a target layer 2 forwarding instance, determining that the destination network entity is a layer 3 virtual interface that is on a core network device in the target network and that corresponds to the target layer 2 forwarding instance, wherein the target layer 2 forwarding instance is any layer 2 forwarding instance other than a VLAN instance; or
when the target VLAN has no binding relationship with any layer 2 forwarding instance other than the VLAN instance, determining that the destination network entity is a VLAN interface that is on the core network device in the target network and that corresponds to the target VLAN.

6. The method according to claim 5, wherein the source device is a wireless device, and the obtaining a target VLAN corresponding to a DHCP service of the source device comprises:
determining a service VLAN corresponding to the source device based on one or more of an identifier of an access point associated with the source device, a radio identifier used by the source device, and a service set identifier of the access point associated with the source device, and using the service VLAN corresponding to the source device as the target VLAN.

7. The method according to any one of claims 1 or 3 to 6, wherein the determining (S303), on the knowledge graph, a transmission path from the source network entity to the destination network entity comprises:
determining, based on a network passed through from the source device to the destination device and the knowledge graph, an intermediate network entity passed through from the source network entity to the destination network entity, wherein the network passed through from the source device to the destination device comprises an underlay network; and
determining the transmission path based on the intermediate network entity passed through from the source network entity to the destination network entity, wherein the transmission path comprises the source network entity, the destination network entity, and the intermediate network entity.

8. The method according to claim 7, wherein the network passed through from the source device to the destination device further comprises an upper-layer network, the upper-layer network is constructed above the underlay network, and the upper-layer network comprises an overlay network and/or a control and provisioning of wireless access points, CAPWAP, network.

9. The method according to claim 8, wherein an access manner in which the source device accesses the target network is wired access, and the method further comprises:
when an interface of a network device that is in the target network and that is connected to the source device has a binding relationship with the target layer 2 forwarding instance, determining that the overlay network is passed through from the source device to the destination device, wherein the target layer 2 forwarding instance is any layer 2 forwarding instance other than the VLAN instance.

10. The method according to claim 8, wherein an access manner in which the source device accesses the target network is wireless access, and the method further comprises:
when a type of a packet between the source device and the destination device is a management packet, determining that the CAPWAP network is passed through from the source device to the destination device;
when a type of a packet between the source device and the destination device is a service packet, the service packet uses a direct forwarding manner, and a service VLAN corresponding to the service packet has a binding relationship with the target layer 2 forwarding instance, determining that the overlay network is passed through from the source device to the destination device, and the target layer 2 forwarding instance is any layer 2 forwarding instance other than the VLAN instance; or
when a type of a packet between the source device and the destination device is a service packet, and the service packet uses a tunnel forwarding manner, determining that the CAPWAP network is passed through from the source device to the destination device.

11. The method according to any one of claims 8 to 10, wherein when the network passed through from the source device to the destination device comprises the overlay network, the determining, based on a network passed through from the source device to the destination device and the knowledge graph, an intermediate network entity passed through from the source network entity to the destination network entity comprises:
determining, on the knowledge graph based on a tunnel endpoint of a tunnel passed through from the source device to the destination device in the overlay network, an overlay network entity corresponding to the tunnel and an underlay network entity that carries the tunnel.

12. The method according to any one of claims 1 to 11, wherein a type of the abnormal event includes one or more of an alarm log, a status change log, and an abnormal key performance indicator.

13. A path determining apparatus (120), wherein the apparatus is configured to perform the path determining method according to any one of claims 1 to 12.

14. A computer storage medium, wherein the computer storage medium stores instructions and when the instructions are executed by a processor of a computer device, the path determining method according to any one of claims 1 to 12 is implemented.

## Patentansprüche

1. Pfadbestimmungsverfahren, das durch eine Analysevorrichtung durchgeführt wird, wobei das Verfahren Folgendes umfasst:
Bestimmen (S302) einer Quellnetzwerkentität und einer Zielnetzwerkentität in einem Wissensgraphen eines Zielnetzwerks, wobei der Wissensgraph eine Vielzahl von Wissensgraphen-Tripeln umfasst, jedes Wissensgraphen-Tripel zwei Netzwerkentitäten und eine Beziehung zwischen den zwei Netzwerkentitäten umfasst und ein Typ einer Netzwerkentität eine Vorrichtung, eine Schnittstelle, ein Protokoll oder ein Dienst ist; und
Bestimmen (S303), auf dem Wissensgraphen, eines Übertragungspfads von der Quellnetzwerkentität zu der Zielnetzwerkentität;
wobei das Bestimmen einer Quellnetzwerkentität und einer Zielnetzwerkentität auf einem Wissensgraphen eines Zielnetzwerks Folgendes umfasst:
Bestimmen einer Quellvorrichtung und einer Zielvorrichtung, die auf das Zielnetzwerk zugreifen; und
Bestimmen der Quellnetzwerkentität basierend auf der Quellvorrichtung und Bestimmen der Zielnetzwerkentität basierend auf der Zielvorrichtung;
**dadurch gekennzeichnet, dass**:
das Bestimmen einer Quellvorrichtung und einer Zielvorrichtung in dem Zielnetzwerk Folgendes umfasst:
Bestimmen der Quellvorrichtung und der Zielvorrichtung in dem Zielnetzwerk basierend auf einem anormalen Ereignis, das in dem Zielnetzwerk erzeugt wird, wobei das anormale Ereignis Zugriffsinformationen eines anormalen Dienstes und einen Diensttyp des anormalen Dienstes umfasst und die Zugriffsinformationen des anormalen Dienstes Zugriffsinformationen der Quellvorrichtung, die den anormalen Dienst enthält, und/oder Zugriffsinformationen der Zielvorrichtung, die den anormalen Dienst enthält, umfassen;
wobei eine anormale Netzwerkentität, die das anormale Ereignis in dem Zielnetzwerk erzeugt, auf dem Wissensgraphen identifiziert wird und das Verfahren nach dem Bestimmen, auf dem Wissensgraphen, eines Übertragungspfads von der Quellnetzwerkentität zu der Zielnetzwerkentität, ferner Folgendes umfasst:
Bestimmen einer Fehlerursache des anormalen Dienstes basierend auf der anormalen Netzwerkentität auf dem Übertragungspfad.

2. Verfahren nach Anspruch 1, wobei die Netzwerkentitäten auf dem Übertragungspfad eine physische Einheit und eine logische Einheit umfassen, die physische Einheit eine physische Vorrichtung und/oder eine physische Schnittstelle umfasst und die logische Einheit eines oder mehrere aus einer logischen Vorrichtung, einer logischen Schnittstelle, einem Protokoll und einem Dienst umfasst.

3. Verfahren nach Anspruch 1, wobei das Bestimmen der Quellnetzwerkentität basierend auf der Quellvorrichtung Folgendes umfasst:
Bestimmen der Quellnetzwerkentität basierend auf Zugriffsinformationen der Quellvorrichtung, wobei die Zugriffsinformationen der Quellvorrichtung eine Kennung der Quellvorrichtung umfassen.

4. Verfahren nach Anspruch 1 oder 3, wobei das Bestimmen der Zielnetzwerkentität basierend auf der Zielvorrichtung Folgendes umfasst:
Bestimmen der Zielnetzwerkentität basierend auf Zugriffsinformationen der Zielvorrichtung, wobei die Zugriffsinformationen der Zielvorrichtung eine Kennung der Zielvorrichtung umfassen.

5. Verfahren nach Anspruch 1 oder 3, wobei das Bestimmen der Zielnetzwerkentität basierend auf der Zielvorrichtung Folgendes umfasst:
Erlangen eines virtuellen lokalen Zielnetzwerks, Ziel-VLAN, das einem Dynamic-Host-Configuration-Protocol-Dienst, DHCP-Dienst, der Quellvorrichtung entspricht; und
wenn das Ziel-VLAN eine Bindungsbeziehung mit einer Ziel-Layer-2-Weiterleitungsinstanz aufweist, Bestimmen, dass die Zielnetzwerkentität eine virtuelle Layer-3-Schnittstelle ist, die sich auf einer Kernnetzwerkvorrichtung in dem Zielnetzwerk befindet und die der Ziel-Layer-2-Weiterleitungsinstanz entspricht, wobei die Ziel-Layer-2-Weiterleitungsinstanz jede beliebige Layer-2-Weiterleitungsinstanz außer einer VLAN-Instanz ist; oder
wenn das Ziel-VLAN keine Bindungsbeziehung mit irgendeiner anderen Layer-2-Weiterleitungsinstanz als der VLAN-Instanz aufweist, Bestimmen, dass die Zielnetzwerkentität eine VLAN-Schnittstelle ist, die sich auf der Kernnetzwerkvorrichtung in dem Zielnetzwerk befindet und die dem Ziel-VLAN entspricht.

6. Verfahren nach Anspruch 5, wobei die Quellvorrichtung eine drahtlose Vorrichtung ist und das Erlangen eines Ziel-VLAN, das einem DHCP-Dienst der Quellvorrichtung entspricht, Folgendes umfasst:
Bestimmen eines Dienst-VLAN, das der Quellvorrichtung basierend auf einem oder mehreren aus einer Kennung eines Zugriffspunkts, der mit der Quellvorrichtung verknüpft ist, einer Funkkennung, die durch die Quellvorrichtung verwendet wird, und einer Dienstsatzkennung des Zugriffspunkts, der mit der Quellvorrichtung verknüpft ist, entspricht und Verwenden des Dienst-VLAN, das der Quellvorrichtung entspricht, als das Ziel-VLAN.

7. Verfahren nach einem der Ansprüche 1 oder 3 bis 6, wobei das Bestimmen (S303), auf dem Wissensgraphen, eines Übertragungspfads von der Quellnetzwerkentität zu der Zielnetzwerkentität Folgendes umfasst:
Bestimmen, basierend auf einem Netzwerk, das von der Quellvorrichtung zu der Zielvorrichtung weitergegeben wird, und dem Wissensgraphen, einer Zwischennetzwerkentität, die von der Quellnetzwerkentität zu der Zielnetzwerkentität weitergegeben wird, wobei das Netzwerk, das von der Quellvorrichtung zu der Zielvorrichtung weitergegeben wird, ein Underlay-Netzwerk umfasst; und
Bestimmen des Übertragungspfads basierend auf der Zwischennetzwerkentität, die von der Quellnetzwerkentität zu der Zielnetzwerkentität weitergegeben wird, wobei der Übertragungspfad die Quellnetzwerkentität, die Zielnetzwerkentität und die Zwischennetzwerkentität umfasst.

8. Verfahren nach Anspruch 7, wobei das Netzwerk, das von der Quellvorrichtung zu der Zielvorrichtung weitergegeben wird, ferner ein Netzwerk der oberen Schicht umfasst, wobei das Netzwerk der oberen Schicht über dem Underlay-Netzwerk aufgebaut ist und wobei das Netzwerk der oberen Schicht ein Overlay-Netzwerk und/oder ein Netzwerk zur Steuerung und Bereitstellung von drahtlosen Zugriffspunkten, CAPWAP-Netzwerk, umfasst.

9. Verfahren nach Anspruch 8, wobei eine Zugriffsart, in der die Quellvorrichtung auf das Zielnetzwerk zugreift, ein drahtgebundener Zugriff ist und das Verfahren ferner Folgendes umfasst:
wenn eine Schnittstelle einer Netzwerkvorrichtung, die sich in dem Zielnetzwerk befindet und die mit der Quellvorrichtung verbunden ist, eine Bindungsbeziehung mit der Ziel-Layer-2-Weiterleitungsinstanz aufweist, Bestimmen, dass das Overlay-Netzwerk von der Quellvorrichtung zu der Zielvorrichtung weitergegeben wird, wobei die Ziel-Layer-2-Weiterleitungsinstanz jede beliebige Layer-2-Weiterleitungsinstanz außer der VLAN-Instanz ist.

10. Verfahren nach Anspruch 8, wobei eine Zugriffsart, in der die Quellvorrichtung auf das Zielnetzwerk zugreift, ein drahtloser Zugriff ist und das Verfahren ferner Folgendes umfasst:
wenn ein Pakettyp zwischen der Quellvorrichtung und der Zielvorrichtung ein Verwaltungspaket ist, Bestimmen, dass das CAPWAP-Netzwerk von der Quellvorrichtung zu der Zielvorrichtung weitergegeben wird;
wenn ein Pakettyp zwischen der Quellvorrichtung und der Zielvorrichtung ein Dienstpaket ist, das Dienstpaket eine direkte Weiterleitungsart verwendet und ein Dienst-VLAN, das dem Dienstpaket entspricht, eine Bindungsbeziehung mit der Ziel-Layer-2-Weiterleitungsinstanz aufweist, Bestimmen, dass das Overlay-Netzwerk von der Quellvorrichtung zu der Zielvorrichtung weitergegeben wird, und die Ziel-Layer-2-Weiterleitungsinstanz eine beliebige Layer-2-Weiterleitungsinstanz außer der VLAN-Instanz ist; oder
wenn ein Pakettyp zwischen der Quellvorrichtung und der Zielvorrichtung ein Dienstpaket ist und das Dienstpaket eine Tunnelweiterleitungsart verwendet, Bestimmen, dass das CAPWAP-Netzwerk von der Quellvorrichtung zu der Zielvorrichtung weitergegeben wird.

11. Verfahren nach einem der Ansprüche 8 bis 10, wobei, wenn das Netzwerk, das von der Quellvorrichtung zu der Zielvorrichtung weitergegeben wird, das Overlay-Netzwerk umfasst, das Bestimmen, basierend auf einem Netzwerk, das von der Quellvorrichtung zu der Zielvorrichtung weitergegeben wird, und dem Wissensgraphen, einer Zwischennetzwerkentität, die von der Quellnetzwerkentität zu der Zielnetzwerkentität weitergegeben wird, Folgendes umfasst:
Bestimmen, auf dem Wissensgraphen, basierend auf einem Tunnelendpunkt eines Tunnels, der von der Quellvorrichtung zu der Zielvorrichtung in dem Overlay-Netzwerk weitergegeben wird, einer Overlay-Netzwerkentität, die dem Tunnel entspricht, und einer Underlay-Netzwerkentität, die den Tunnel enthält.

12. Verfahren nach einem der Ansprüche 1 bis 11, wobei ein Typ des anormalen Ereignisses eines oder mehrere aus einem Alarmprotokoll, einem Statusänderungsprotokoll und einem anormalen Schlüsselleistungsindikator umfasst.

13. Pfadbestimmungsgerät (120), wobei das Gerät dazu konfiguriert ist, das Pfadbestimmungsverfahren nach einem der Ansprüche 1 bis 12 durchzuführen.

14. Computerspeichermedium, wobei das Computerspeichermedium Anweisungen speichert und, wenn die Anweisungen durch einen Prozessor einer Computervorrichtung ausgeführt werden, das Pfadbestimmungsverfahren nach einem der Ansprüche 1 bis 12 implementiert wird.

## Revendications

1. Procédé de détermination de chemin exécuté par un dispositif d'analyse, dans lequel le procédé comprend :
la détermination (S302) d'une entité de réseau source et d'une entité de réseau de destination sur un graphe de connaissances d'un réseau cible, dans lequel le graphe de connaissances comprend une pluralité de triplets de graphe de connaissances, chaque triplet de graphe de connaissances comprend deux entités de réseau et une relation entre les deux entités de réseau, et un type d'une entité de réseau est un dispositif, une interface, un protocole ou un service ; et
la détermination (S303), sur le graphe de connaissances, d'un chemin de transmission de l'entité de réseau source à l'entité de réseau de destination ;
dans lequel la détermination d'une entité de réseau source et d'une entité de réseau de destination sur un graphe de connaissances d'un réseau cible comprend :
la détermination d'un dispositif source et d'un dispositif de destination qui accèdent au réseau cible ; et
la détermination de l'entité de réseau source sur la base du dispositif source, et la détermination de l'entité de réseau de destination sur la base du dispositif de destination ;
**caractérisé en ce que** :
la détermination d'un dispositif source et d'un dispositif de destination dans le réseau cible comprend :
la détermination du dispositif source et du dispositif de destination dans le réseau cible sur la base d'un événement anormal généré dans le réseau cible, dans lequel l'événement anormal comprend des informations d'accès d'un service anormal et un type de service du service anormal, et les informations d'accès du service anormal comprennent des informations d'accès du dispositif source qui transporte le service anormal et/ou des informations d'accès du dispositif de destination qui transporte le service anormal ;
dans lequel une entité de réseau anormale qui génère l'événement anormal dans le réseau cible est identifiée sur le graphe de connaissances, et après la détermination, sur le graphe de connaissances, d'un chemin de transmission de l'entité de réseau source à l'entité de réseau de destination, et le procédé comprend également :
la détermination de la cause profonde d'un défaut du service anormal sur la base de l'entité de réseau anormale sur le chemin de transmission.

2. Procédé selon la revendication 1, dans lequel les entités de réseau sur le chemin de transmission comprennent une entité physique et une entité logique, l'entité physique comprend un dispositif physique et/ou une interface physique, et l'entité logique comprend l'un ou plusieurs d'un dispositif logique, d'une interface logique, d'un protocole et d'un service.

3. Procédé selon la revendication 1, dans lequel la détermination de l'entité de réseau source sur la base du dispositif source comprend :
la détermination de l'entité de réseau source sur la base des informations d'accès du dispositif source, dans lequel les informations d'accès du dispositif source comprennent un identifiant du dispositif source.

4. Procédé selon la revendication 1 ou 3, dans lequel la détermination de l'entité de réseau de destination sur la base du dispositif de destination comprend :
la détermination de l'entité de réseau de destination sur la base des informations d'accès du dispositif de destination, dans lequel les informations d'accès du dispositif de destination comprennent un identifiant du dispositif de destination.

5. Procédé selon la revendication 1 ou 3, dans lequel la détermination de l'entité de réseau de destination sur la base du dispositif de destination comprend :
l'obtention d'un réseau local virtuel cible, VLAN, correspondant à un service de protocole de configuration d'hôte dynamique, DHCP, du dispositif source ; et
lorsque le VLAN cible a une relation de liaison avec une instance de transfert de couche 2 cible, la détermination que l'entité de réseau de destination est une interface virtuelle de couche 3 qui se trouve sur un dispositif de réseau central dans le réseau cible et qui correspond à l'instance de transfert de couche 2 cible, dans lequel l'instance de transfert de couche 2 cible est toute instance de transfert de couche 2 autre qu'une instance de VLAN ; ou
lorsque le VLAN cible n'a aucune relation de liaison avec une instance de transfert de couche 2 autre que l'instance VLAN, la détermination que l'entité de réseau de destination est une interface VLAN qui se trouve sur le dispositif de réseau central dans le réseau cible et qui correspond au VLAN cible.

6. Procédé selon la revendication 5, dans lequel le dispositif source est un dispositif sans fil, et l'obtention d'un VLAN cible correspondant à un service DHCP du dispositif source comprend :
la détermination d'un VLAN de service correspondant au dispositif source sur la base de l'un ou plusieurs d'un point d'accès associé au dispositif source, d'un identifiant radio utilisé par le dispositif source et d'un identifiant d'ensemble de services du point d'accès associé au dispositif source, et l'utilisation du VLAN de service correspondant au dispositif source comme le VLAN cible.

7. Procédé selon l'une quelconque des revendications 1 ou 3 à 6, dans lequel la détermination (S303), sur le graphe de connaissances, d'un chemin de transmission de l'entité de réseau source à l'entité de réseau de destination comprend :
la détermination, sur la base d'un réseau transmis du dispositif source au dispositif de destination et du graphe de connaissances, d'une entité de réseau intermédiaire transmise de l'entité de réseau source à l'entité de réseau de destination, dans lequel le réseau transmis du dispositif source au dispositif de destination comprend un réseau sous-jacent ; et
la détermination du chemin de transmission sur la base de l'entité de réseau intermédiaire transmise de l'entité de réseau source à l'entité de réseau de destination, dans lequel le chemin de transmission comprend l'entité de réseau source, l'entité de réseau de destination et l'entité de réseau intermédiaire.

8. Procédé selon la revendication 7, dans lequel le réseau transmis du dispositif source au dispositif de destination comprend également un réseau de couche supérieure, le réseau de couche supérieure est construit au-dessus du réseau sous-jacent, et le réseau de couche supérieure comprend un réseau de superposition et/ou un réseau de contrôle et de provisionnement de points d'accès sans fil, CAPWAP.

9. Procédé selon la revendication 8, dans lequel un mode d'accès par lequel le dispositif source accède au réseau cible est un accès filaire, et le procédé comprend également :
lorsqu'une interface d'un dispositif de réseau qui se trouve dans le réseau cible et qui est connectée au dispositif source a une relation de liaison avec l'instance de transfert de couche 2 cible, la détermination que le réseau de superposition est transmis du dispositif source au dispositif de destination, dans lequel l'instance de transfert de couche 2 cible est toute instance de transfert de couche 2 autre que l'instance VLAN.

10. Procédé selon la revendication 8, dans lequel un mode d'accès par lequel le dispositif source accède au réseau cible est un accès sans fil, et le procédé comprend également :
lorsqu'un type d'un paquet entre le dispositif source et le dispositif de destination est un paquet de gestion, la détermination que le réseau CAPWAP est transmis du dispositif source au dispositif de destination ;
lorsqu'un type d'un paquet entre le dispositif source et le dispositif de destination est un paquet de service, que le paquet de service utilise une méthode de transfert direct, et qu'un VLAN de service correspondant au paquet de service a une relation de liaison avec l'instance de transfert de couche 2 cible, la détermination que le réseau de superposition est transmis du dispositif source au dispositif de destination, et l'instance de transfert de couche 2 cible est toute instance de transfert de couche 2 autre que l'instance VLAN ; ou
lorsqu'un type d'un paquet entre le dispositif source et le dispositif de destination est un paquet de service, et que le paquet de service utilise une méthode de transfert par tunnel, la détermination que le réseau CAPWAP est transmis du dispositif source au dispositif de destination.

11. Procédé selon l'une quelconque des revendications 8 à 10, dans lequel lorsque le réseau transmis du dispositif source au dispositif de destination comprend le réseau de superposition, la détermination, sur la base d'un réseau transmis du dispositif source au dispositif de destination et du graphe de connaissances, d'une entité de réseau intermédiaire transmise de l'entité de réseau source à l'entité de réseau de destination comprend :
la détermination, sur le graphe de connaissances sur la base d'un point de terminaison de tunnel d'un tunnel transmis du dispositif source au dispositif de destination dans le réseau de superposition, d'une entité de réseau de superposition correspondant au tunnel et d'une entité de réseau sous-jacente qui transporte le tunnel.

12. Procédé selon l'une quelconque des revendications 1 à 11, dans lequel un type de l'événement anormal comporte l'un ou plusieurs d'un journal d'alarme, d'un journal de changement d'état et d'un indicateur de performance clé anormal.

13. Appareil de détermination de chemin (120), dans lequel l'appareil est configuré pour réaliser le procédé de détermination de chemin selon l'une quelconque des revendications 1 à 12.

14. Support de stockage informatique, dans lequel le support de stockage informatique stocke des instructions et lorsque les instructions sont exécutées par un processeur d'un dispositif informatique, le procédé de détermination de chemin selon l'une quelconque des revendications 1 à 12 est mis en œuvre.
